# EUROPÄISCHE PATENTSCHRIFT

(11) **EP 3 129 254 B1**
(45) Veröffentlichungstag und Bekanntmachung des Hinweises auf die Patenterteilung: **28.07.2021**
(21) Anmeldenummer: 15728469.6
(22) Anmeldetag: 03.06.2015
(51) Int. Cl.: B60L 9/04, H02M 3/07

(54) **SCHIENENFAHRZEUG UMFASSEND EINE SCHALTUNG**
RAIL VEHICLE COMPRISING A CIRCUIT
VÉHICULE FERROVIAIRE COMPRENANT UN CIRCUIT

(30) Priorität: 06.06.2014 DE 102014210898
(43) Veröffentlichungstag der Anmeldung: 15.02.2017
(73) Patentinhaber: Siemens Mobility GmbH, 81739 München (DE)
(72) Erfinder: REIMANN, Oliver, 91056 Erlangen (DE); SCHWARZER, Jens Konstantin, 47809 Krefeld (DE)
(86) Internationale Anmeldenummer: PCT/EP2015/062321
(87) Internationale Veröffentlichungsnummer: WO 2015/185588

(56) Entgegenhaltungen:
- EP-A2- 0 558 339
- EP-A2- 1 562 279
- JP-A- 2010 063 267
- US-A- 5 870 295
- US-A1- 2005 052 220
- US-A1- 2007 211 503
- US-A1- 2008 284 498
- US-B1- 7 301 400
- HOLGER HOFFMANN ET AL: "High voltage IGBTs and medium frequency transformer in DC-DC converters for railway applications", POWER ELECTRONICS ELECTRICAL DRIVES AUTOMATION AND MOTION (SPEEDAM), 2010 INTERNATIONAL SYMPOSIUM ON, IEEE, PISCATAWAY, NJ, USA, 14. Juni 2010 (2010-06-14), Seiten 744-749, XP031727597, ISBN: 978-1-4244-4986-6
- TANEL JALAKAS ET AL: "Development of 50-kW Isolated DC/DC Converter with High-Voltage IGBTs", 2007 COMPATIBILITY IN POWER ELECTRONICS, 1. Mai 2007 (2007-05-01), Seiten 1-6, XP055206792, DOI: 10.1109/CPE.2007.4296566 ISBN: 978-1-42-441055-2
- None

## Beschreibung

Die Erfindung betrifft ein Schienenfahrzeug umfassend eine Schaltung, welches im Betrieb durch eine Netzversorgung mit elektrischer Energie speisbar ist, mit einer Eingangsseite, die dazu vorbereitet ist, eine von der Netzversorgung bereitgestellte Netzspannung zu führen, und einer Verbraucherseite, die zumindest einem Fahrzeugverbraucher zugeordnet ist. Das Dokument JP 2010 063267 A offenbart eine Stromversorgungsvorrichtung zur Anwendung in einem Schienenfahrzeug.

Zur Speisung von elektrischen Fahrzeugen, die im Betrieb eine elektrische Energie aus einer externen Versorgung beziehen, bestehen Versorgungsnetze, die historisch bedingt und insbesondere länderspezifisch unterschiedliche Netzspannungen bereitstellen. Diese verschiedenen Netzspannungen erfordern auf der Fahrzeugseite jeweils eine spezifische, an die entsprechende Netzspannung angepasste Ausrüstung. Bezüglich der heutzutage eingesetzten Elemente der Leistungselektronik können sich die Ausrüstungen in der Dimensionierung dieser Elemente voneinander stark unterscheiden. Diese Situation ist bezüglich von Standardisierungsbemühungen auf der Verbraucherseite nachteilhaft. Diese Problematik betrifft insbesondere elektrische Schienenfahrzeuge, deren Ausrüstung im Hinblick auf die verschiedenen, nationalen Erfordernisse auszulegen ist. Insbesondere für einen Betrieb von Schienenfahrzeugen unter einer Versorgungsspannung von 3kV DC müssen Elemente der Leistungselektronik speziell für diesen Anwendungsfall ausgelegt werden. Der Einsatz von Elementen, die im Industriebereich weit verbreitet sind, ist ohne Weiteres nicht möglich.

Der Erfindung liegt die Aufgabe zugrunde, ein Schienenfahrzeug mit einer derartigen Schaltung bereitzustellen, durch welche diese Nachteile in einer konstruktiv einfachen Weise vermindert, insbesondere verhindert werden können.

Hierzu wird vorgeschlagen, dass die Schaltung eine Spannungswandlungseinheit zur Bereitstellung einer für den Betrieb des elektrischen Fahrzeugverbrauchers angepassten Spannung an der Verbraucherseite umfasst, die eine erste, der Eingangsseite zugeordnete, im Betrieb unter einem Potential stehende Teileinheit, zumindest eine zweite, der Verbraucherseite zugeordnete, im Betrieb unter einem Potential stehende Teileinheit und eine Ladungsübertragungseinheit aufweist, die dazu vorgesehen ist, eine Ladung von der ersten Teileinheit zur zweiten Teileinheit zu übertragen. Hierdurch kann auf eine konstruktiv einfache Weise auf der Verbraucherseite eine gegenüber der Netzspannung reduzierte oder erhöhte Spannung bereitgestellt werden, wodurch in der Auslegung der elektrischen Anlage des Fahrzeugs eine vorteilhafte, zumindest teilweise Unabhängigkeit vom Wert der Netzspannung erreicht werden kann. Bei einer Spannungsreduktion können insbesondere durch den Wert der Netzspannung bedingte konstruktions- und kostenaufwändige Maßnahmen eingespart werden.

Die Ladungsübertragungseinheit kann zweckmäßigerweise abwechselnd mit den Teileinheiten derart verbunden werden, dass das Potential, unter welchem eine von der Ladungsübertragungseinheit aufgenommene Ladung steht, vor der Übertragung dem Potential der ersten Teileinheit und nach der Übertragung dem Potential der zweiten Teileinheit entspricht.

Die Erfindung eignet sich insbesondere für einen elektrischen Fahrzeugverbraucher, welcher als Traktionsanlage ausgebildet ist. Dabei dient die Schaltung insbesondere dazu, eine elektrische Spannung bereitzustellen, aus welcher zumindest eine Leistungsversorgungseinheit der Traktionsanlage, z.B. ein Traktionsumrichter, einen elektrischen Strom, insbesondere einen Drehstrom, gemäß einer zu erzeugenden Traktionsleistung erzeugt. Der Fahrzeugverbraucher kann ferner als Bordnetzversorgung ausgebildet sein.

Die Erfindung eignet sich für einen Einsatz bei einer als Gleichspannung ausgebildeten Netzspannung, da die oben erwähnten Maßnahmen zur Zuführung dieser Spannung zum Verbraucher herkömmlicherweise - besonders bei einer Netzspannung in Höhe von 3 kV DC - besonders aufwendig sein können. Es ist daher vorteilhaft, wenn die Eingangsseite dazu vorbereitet ist, eine von der Netzversorgung bereitgestellte, als Gleichspannung ausgebildete Netzspannung zu führen. Die Schaltung hat zweckmäßigerweise die Funktion eines Tiefsetzstellers bzw. Hochsetzstellers als Einspeiseschaltung des Schienenfahrzeugs. Im Vergleich zu einem konventionellen Tiefsetzteller bzw. Hochsetzsteller kann durch die Erfindung eine besonders konstruktiv einfache Ausführung dieser Funktion erreicht werden. Insbesondere kann die Dimensionierung der passiven und aktiven Bauteile signifikativ reduziert werden. Es kann insbesondere gegenüber einem klassischen Einsatz eines Choppers ein kleiner und leichter Aufbau der Schaltung erreicht werden.

Eine Vereinheitlichung in der Ausführung der elektrischen Anlage von unter Gleichspannung betreibbaren Fahrzeugen kann außerdem zumindest angestrebt werden, da eine Abhängigkeit vom Wert der Netzspannung durch die Erfindung erheblich vermindert werden kann. Insbesondere kann eine für einen Betrieb unter einer gegebenen verbraucherseitigen Spannung angepasste Auslegung der elektrischen Anlage vorteilhafterweise bei einer Netzspannung, die der doppelten und/oder der halben verbraucherseitigen Spannung entspricht, ohne aufwendige Anpassungen benutzt werden, wenn die Spannungswandlungseinheit dazu vorgesehen ist, eine Spannung an der Verbraucherseite bereitzustellen, die der halben oder doppelten Netzspannung entspricht. Bezüglich einer Ausbildung des Fahrzeugverbrauchers als Traktionsanlage kann eine erhöhte Flexibilität in der Anwendung einer Traktionsanlage erreicht werden, ohne dass aufwendige Anpassungen an Elementen derselben, insbesondere der Leistungselektronik und der Antriebsmotoren, notwendig sind. Eine für einen Betrieb unter 1,5kV DC angepasste Auslegung einer Traktionsanlage und/oder einer Bordnetzversorgung kann vorteilhafterweise bei einer Netzspannung von 3kV DC und/oder 750 V DC ohne aufwendige Anpassungen benutzt werden. Bei einer Netzspannung von 3kV DC können außerdem durch eine Halbierung Elemente für die Leistungselektronik eingesetzt werden, die im Industriebereich weit verbreitet sind. Eine kostenaufwendige Konstruktion einer Leistungselektronik speziell für diesen Anwendungsfall kann demnach entfallen. Insbesondere können für eine Leistungselektronik anstatt von Hochvolt-IGBTs, die z.B. zu einem Betrieb unter einer Spannung von 6,5kV vorgesehen sind, niedersperrende IGBTs eingesetzt werden, die sich durch eine höhere Schaltfrequenz, eine hohe Verfügbarkeit und niedrigere Preise kennzeichnen.

Die Ladungsübertragungseinheit weist zumindest ein Element, welches einem Paar von Teileinheiten zugeordnet ist, und eine Schalteinheit auf, die dazu vorgesehen ist, das Element zwischen den Teileinheiten zyklisch umzuschalten. Hierdurch kann zur Ladungsübertragung ein besonders geringer Schaltungsaufwand erreicht werden. Unter einem Umschalten des Elements der Ladungsübertragungseinheit "zwischen den Teileinheiten" soll verstanden werden, dass die Klemmen des Elements zyklisch mit der ersten Teileinheit und der zweiten Teileinheit des dem Element zugeordneten Paars derart verbunden werden, dass das Element unter dem Potential der ersten Teileinheit des Paares und dem Potential der zweiten Teileinheit des Paares zyklusgemäß und daher zeitlich nacheinander steht. Das Element ist zweckmäßigerweise als Ladungsspeicherelement ausgebildet.

Das Paar ist von der ersten Teileinheit und der zweiten Teileinheit der Schaltung gebildet. Insbesondere ist eine Ausführung der Ladungsübertragungseinheit mit lediglich einem umschaltbaren Element möglich. Außerdem führt vorzugsweise zumindest ein Teil der ersten Teileinheit die Netzspannung, während zumindest ein Teil der zweiten Teileinheit vorzugsweise die an der Verbraucherseite bereitgestellte Spannung führt. Insbesondere kann der Teil der ersten Teileinheit die Eingangsseite der Schaltung bilden, während der Teil der zweiten Teileinheit einen Ausgang der Schaltung auf der Verbraucherseite bilden kann.

Gemäß einer bevorzugten Ausführung der Erfindung ist das zumindest ein Element der Ladungsübertragungseinheit als Kondensator ausgebildet, wodurch der Einsatz eines kompakten, einfach ausgeführten, und mit niedrigen Verlusten behafteten passiven Bauteils erreicht werden kann.

Es können außerdem gängige, kostengünstige Elemente einer Leistungselektronik zur Bildung der Spannungswandlungseinheit eingesetzt werden, wenn die Teileinheiten jeweils eine Halbbrückenschaltung aufweisen und das zumindest ein Element zwischen den Brückenmittelpunkten der Halbbrückenschaltungen geschaltet ist, wobei die Schalteinheit zumindest von steuerbaren Schaltelementen einer Halbbrückenschaltung gebildet ist. Die steuerbaren Schaltelemente entsprechen zweckmäßigerweise üblichen Schaltventilen einer Leistungselektronik. Ferner kann die Schalteinheit von steuerbaren Schaltelementen der der Eingangsseite zugeordneten Halbbrückenschaltung gebildet sein.

Eine kompakte Ausgestaltung der Spannungswandlungseinheit kann außerdem dadurch erreicht werden, dass die Schaltung eine Steuereinheit zur Steuerung der Schalteinheit aufweist, die dazu vorgesehen ist, die Schalteinheit mit einer Frequenz von zumindest 1 kHz zu betreiben. Insbesondere kann dadurch eine Ausführung der Ladungsübertragungseinheit erzielt werden, welche einen kleinen Bauraum in Anspruch nimmt, da das umschaltbare Element kompakt ausgeführt sein kann. Ist dieses als Kondensator ausgebildet, kann dieser vorteilhaft klein dimensioniert werden.

Die zyklische Umschaltung durch die Schalteinheit erfolgt gemäß einem vordefinierten Tastgrad. Die Schaltung weist ein Mittel, welches mit dem zumindest einen Element der Ladungsübertragungseinheit eine Resonanzfrequenz definiert, und eine Steuereinheit zur Steuerung der Schalteinheit auf, die dazu vorgesehen ist, die Schalteinheit mit der Resonanzfrequenz zu betreiben. Hierdurch können Schaltvorgänge der Schalteinheit vorteilhaft in möglichst stromlosen Phasen erfolgen. Vorzugsweise weist die Schalteinheit steuerbare Schaltelemente auf, die zweckmäßigerweise üblichen Schaltventilen einer Leistungselektronik entsprechen. Die Umschaltung erfolgt dabei vorzugsweise über eine quasiresonante Steuerung der Schaltventile, d.h. die Schaltvorgänge der Schaltventile erfolgen in möglichst stromlosen Phasen. Dadurch können Schaltverluste der Schaltventile signifikativ reduziert werden.

Es werden Ausführungsbeispiele der Erfindung anhand der Zeichnungen erläutert. Es zeigen:
- Figur 1:: eine Netzversorgung und ein Schienenfahrzeug mit einer Schaltung und einem elektrischen Verbraucher, wobei die Schaltung zur Halbierung der Netzversorgungspannung vorgesehen ist,
- Figur 2:: eine Brückenschaltung der Schaltung,
- Figur 3:: eine weitere Brückenschaltung der Schaltung,
- Figuren 4 bis 6:: alternative Ausführungen der Schaltung aus Figur 1 und
- Figur 7:: eine alternative Ausführung der Schaltung aus Figur 1, wobei die Schaltung zur Verdopplung der Netzversorgungspannung vorgesehen ist.

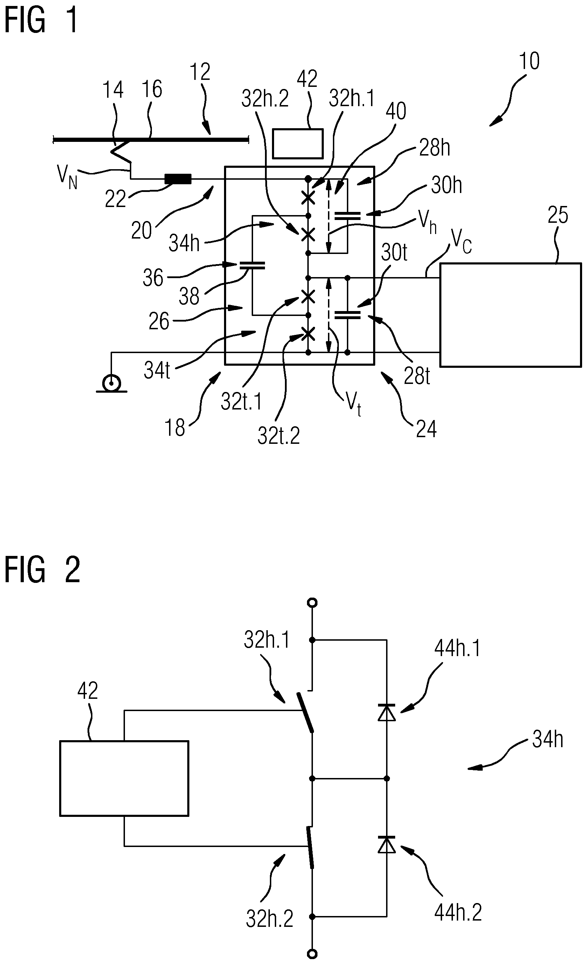

Figur 1 zeigt ein als Schienenfahrzeug 10 ausgebildetes Fahrzeug in einer stark schematisierten Ansicht. Dieses ist als Elektrofahrzeug ausgebildet, welches für dessen Betrieb und insbesondere in einem Traktionsbetrieb eine elektrische Energie aus einer Netzversorgung 12 bezieht. Die Netzversorgung 12 stellt eine Netzspannung V_{N} bereit, die eine Gleichspannung in Höhe von 3 kV ist. Diese Netzspannung V_{N} wird von einer Spannungserfassungseinheit 14 erfasst und wird in eine elektrische Anlage des Schienenfahrzeuges 10 eingespeist. In der fachmännischen Sprache ist die Spannungserfassungseinheit 14 auch "Stromabnehmer" genannt. In der betrachteten Ausführung wird die Netzspannung V_{N} von einer als Oberleitung ausgebildeten netzseitigen Versorgungsleitung 16 bereitgestellt, wobei die Spannungserfassungseinheit 14 auf dem Dach des Schienenfahrzeugs 10 und insbesondere als Pantograph ausgebildet ist. In einer Ausführungsvariante kann die netzseitige Versorgungsleitung 16 als Stromschiene ausgebildet sein, die insbesondere im Gleisbettbereich angeordnet ist.

Die elektrische Anlage des Schienenfahrzeugs 10 umfasst eine Schaltung 18, die als sogenannte Einspeiseschaltung dient. Die Einspeiseschaltung 18 weist dabei eine Eingangsseite 20 auf, die mit der Spannungserfassungseinheit 14 elektrisch verbindbar ist und dazu vorbereitet ist, die Netzspannung V_{N} zu führen. In der betrachteten Ausführung ist eine Induktivität 22 zwischen der Eingangsseite 20 und der Spannungserfassungseinheit 14 angeordnet. Außerdem ist ein in der Figur nicht näher dargestellter Hauptschalter zwischen der Spannungserfassungseinheit 14 und der Eingangsseite 20 angeordnet. Die Schaltung 18 weist des Weiteren eine der Eingangsseite 20 abgewandte Verbraucherseite 24 auf, die zumindest einem Verbraucher 25 des Schienenfahrzeugs 10 zugeordnet ist.

Die Schaltung 18 umfasst eine Spannungswandlungseinheit 26, die dazu vorgesehen ist, eine für den Betrieb des Fahrzeugverbrauchers 25 angepasste Spannung V_{C} bereitzustellen. Diese Spannung V_{C} wird wie unten näher dargestellt an der Verbraucherseite 24 der Schaltung 18 bereitgestellt.

Zur Umwandlung der Netzspannung V_{N} weist die Spannungswandlungseinheit 26 eine erste Teileinheit 28h und eine zweite Teileinheit 28t auf. Die Teileinheiten weisen jeweils einen Ladungsspeicher 30h bzw. 30t und ein Paar von Schaltelementen 32h.1, 32h.2 bzw. 32t.1, 32t.2 auf, das zum jeweiligen Ladungsspeicher 30h bzw. 30t parallel geschaltet ist. Die Paare von Schaltelementen sind jeweils Bestandteil einer Halbbrückenschaltung 34h bzw. 34t, wobei die Halbbrückenschaltungen 34h und 34t in Reihe zueinander geschaltet sind. Die erste Teileinheit 28h mit der Halbbrückenschaltung 34h ist der Eingangsseite 20 zugeordnet. Insbesondere führt im Betrieb zumindest ein die Eingangsseite 20 bildender Teil der Teileinheit 28h die Netzspannung V_{N}. Die zweite Teileinheit 28t mit der Halbbrückenschaltung 34t ist der Verbraucherseite 24 zugeordnet, wobei zumindest ein die Verbraucherseite 24 bildender Teil der Teileinheit 28t im Betrieb die für den Betrieb des Fahrzeugverbrauchers 25 angepasste Spannung V_{C} führt. Die Teileinheiten 28h und 28t werden im folgenden Text "hohe" bzw. "tiefe" Teileinheiten genannt.

Die Schaltung 18 weist zur Ladungsübertragung von der hohen Teileinheit 28h in die tiefe Teileinheit 28t eine Ladungsübertragungseinheit 36 mit einem als Kondensator ausgebildeten Element 38 auf. Dieses Element 38 ist dem von der hohen Teileinheit 28h und der tiefen Teileinheit 28t gebildeten Paar von Teileinheiten zugeordnet und wird zwischen den jeweiligen Potentialen Vₕ, Vₜ der Teileinheiten 28h und 28t zyklisch umgeschaltet. Das Element 38 ist schaltungstechnisch derart angeordnet, dass es die Brückenmittelpunkte der Halbbrückenschaltungen 34h, 34t miteinander verbindet. Somit ist es zwischen den Brückenmittelpunkten geschaltet, wobei diese jeweils zwischen zwei Schaltelementen 32h.1, 32h.2 bzw. 32t.1, 32t.2 der jeweiligen Halbbrückenschaltung 34h bzw. 34t angeordnet sind. Zumindest die Schaltelemente 32h.1, 32h.2 werden derart in ihrem Schaltbetrieb gesteuert, dass das Element 38 zyklisch zwischen den jeweiligen Potentialen Vₕ, Vₜ der hohen und der tiefen Teileinheit 28h, 28t umgeschaltet wird. Die Schaltelemente 32h.1, 32h.2 der Halbbrückenschaltung 34h sind demnach Bestandteile einer Schalteinheit 40, die dazu dient, das Element 38 zwischen den jeweiligen Potentialen Vₕ, Vₜ der Teileinheiten 28h und 28t zyklisch umzuschalten. Die der Halbbrückenschaltung 34h zugeordnete, in der Figur schematisch dargestellte Steuereinheit dient dabei als Steuereinheit 42 für die Schalteinheit 40. Sie ist für einen Schaltbetrieb der Schaltelemente 32h.1, 32h.2 programmiert, bei welchem diese mit einem Tastgrad von 50% und mit einer Frequenz von zumindest 1 kHz geschaltet werden. Die Halbbrückenschaltung 34t der tiefen Teileinheit 28t dient dazu, das erzeugte Spannungssignal gleich zu richten, sodass die an der Verbraucherseite 24 bereitgestellte Spannung V_{C} eine Gleichspannung ist.

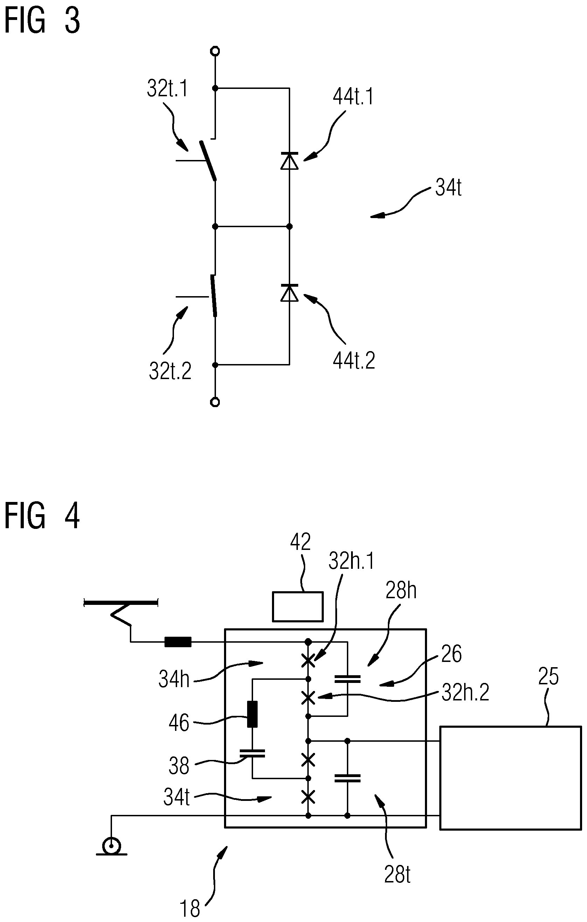

In der in Figur 1 betrachteten Ausführung sowie in den Ausführungen gemäß den Figuren 4 bis 6 wird durch die Schaltung 18 ausgehend von der Netzspannung V_{N} von 3kV die Spannung V_{C} in Höhe von 1,5kV bereitgestellt. Die Netzspannung V_{N} wird demnach mittels der Spannungswandlungseinheit 26 halbiert. Die Potentiale Vₕ und Vₜ der Teileinheiten 28h, 28t sind dabei identisch und entsprechen jeweils der Hälfte der Netzspannung V_{N}, d.h. entsprechen auch der an der Verbraucherseite 24 bereitgestellten Spannung V_{C} in Höhe von 1,5kV.

Figur 2 zeigt die Ausführung der Halbbrückenschaltung 34h der hohen Teileinheit 28h. Diese weist zwei Transistoren, insbesondere jeweils in der Form eines IGBTs (Insulated Gate Bipolar Transistor) auf, welche die steuerbaren Schaltelemente 32h.1 und 32h.2 bilden. Parallel zu den Schaltelementen ist jeweils eine Diode 44h.1 bzw. 44h.2 geschaltet.

Der von der Schaltung 18 mit Energie versorgbare Verbraucher 25 des Schienenfahrzeugs 10 ist in Figur 1 schematisch dargestellt. In einer ersten Ausführung kann dieser eine Traktionsanlage sein. Diese weist bekannterweise eine Leistungsversorgungseinheit auf, die dazu dient, ausgehend von der bereitgestellten Gleichspannung V_{C} einen elektrischen Strom, insbesondere Drehstrom, zu erzeugen, dessen Eigenschaften gemäß einer zu erzeugenden Traktionsleistung eingestellt werden. Die Leistungsversorgungseinheit kann als Traktionsstromrichter ausgebildet sein.

Figur 3 zeigt die Ausführung der Halbbrückenschaltung 34t der tiefen Teileinheit 28t bei dieser Ausbildung des Verbrauchers 25 als Traktionsanlage. Sie ist identisch zur Halbbrückenschaltung 34h ausgebildet und weist zwei Transistoren, insbesondere jeweils in der Form eines IGBTs (Insulated Gate Bipolar Transistor) auf, welche die steuerbaren Schaltelemente 32t.1 und 32t.2 bilden. Parallel zu den Schaltelementen ist jeweils eine Diode 44t.1 bzw. 44t.2 geschaltet.

In einer weiteren Ausführung kann ein von der Schaltung 18 versorgbarer Verbraucher 25 eine elektrische Bordnetzversorgung sein. Dieses weist an dessen Eingang bekannterweise einen Umrichter auf. Eine an diesen Verbraucher 25 angepasste Ausführung der Halbbrückenschaltung 34t der tiefen Teileinheit 28t kann - anders als in der Ausführung gemäß Figur 3 - einer einfachen Reihenschaltung von zwei Dioden entsprechen.

Die Figuren 4 bis 6 zeigen jeweils eine alternative Ausführung der Schaltung 18. Um unnötige Wiederholungen zu vermeiden werden lediglich die Unterschiede zur Ausführung gemäß Figur 1 beschrieben. In den gezeigten Ausbildungen gemäß Figur 4 bis 6 weist die Schaltung 18, insbesondere die Spannungswandlungseinheit 26 ein Mittel 46 auf, welches mit dem Element 38 der Ladungsübertragungseinheit 36 eine Resonanzfrequenz definiert. Insbesondere ist das Mittel 46 in den Ausbildungen gemäß Figur 4 bis 6 als eine oder mehrere Induktivitäten ausgebildet. Die Steuereinheit 42 ist dabei dazu vorgesehen, die Schalteinheit 40, insbesondere deren Schaltelemente 32h.1 und 32h.2 mit dieser Resonanzfrequenz zu steuern. Somit können diese Schaltelemente bei möglichst niedrigen Strömen geschaltet werden. Die Schalteinheit 40 wird dabei quasiresonant betrieben. Das Schaltelement 32h.1 wird insbesondere in einer stromlosen Phase geschlossen und in der nächsten stromlosen Phase nach einer Halbwelle wieder geöffnet. Eine kurze nachfolgende Verzögerungszeit kann dazu wirken, dass Ladungen aus den Schaltelementen entfernt werden. Der gleiche Vorgang erfolgt dann anschließend für das Schaltelement 32h.2.

In der Ausführung gemäß Figur 4 ist das Mittel 46 in Reihe mit dem Element 38 geschaltet, sodass diese zwischen den Brückenschaltungen 34h und 34t, insbesondere zwischen den Brückenmittelpunkten angeordnet sind.

In einer beispielhaften Auslegung weisen die Komponenten der Schaltung 18 folgende Werte auf: Ladungsspeicher 30h und 30t jeweils 500µF; Element 38: 250µF; Mittel 46: 12µH.

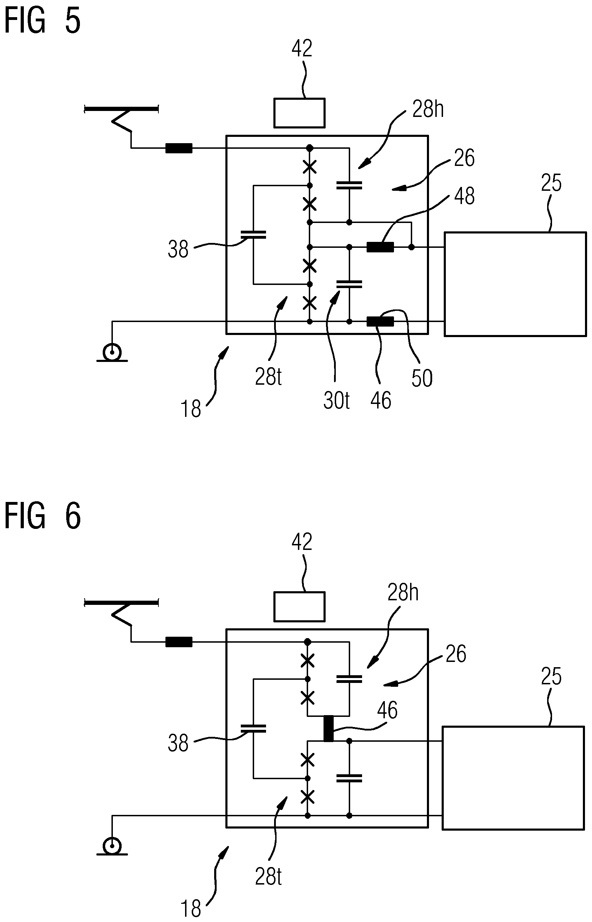

Figur 5 zeigt eine Alternative Ausbildung mit einer Ausführung des Mittels 46 mit zwei Elementen 48 und 50, die insbesondere jeweils als Induktivität ausgebildet sind. Beide Elemente 48, 50 sind mit den Klemmen des Ladungsspeichers 30t der tiefen Teileinheit 28t direkt und derart verbunden, dass sie zwischen diesem Ladungsspeicher 30t und dem Verbraucher 25 angeordnet sind. Die Ausgangsklemmen dieser Elemente 48, 50 bilden demnach die Verbraucherseite 24 der Schaltung 18. Zwischen dem Element 48 und dem Verbraucher 25 ist ferner die Verbindung zur hohen Teileinheit 28h abgezweigt.

Die Ausbildung gemäß Figur 6 unterscheidet sich von den vorherigen Ausführungen dadurch, dass das Mittel 46 die hohe und tiefe Teileinheit 28h, 28t direkt in Reihe miteinander verbindet.

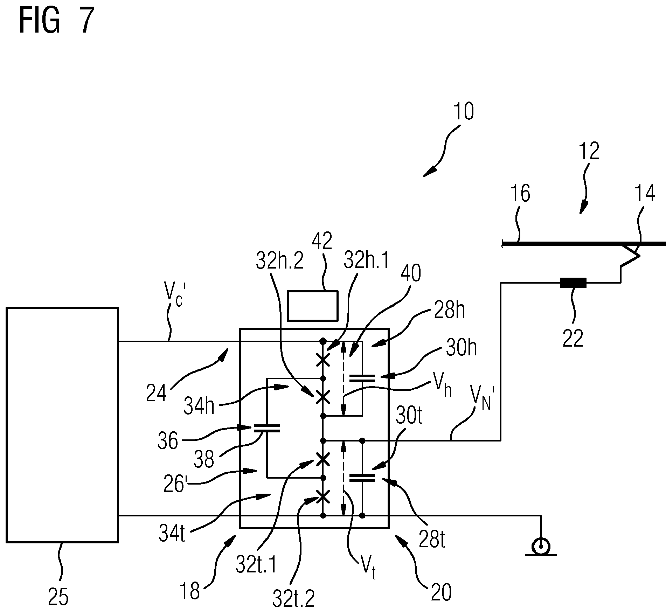

Wie oben bereits erwähnt weist die Schaltung 18 in den Ausführungen gemäß den Figuren 1 und 4 bis 6 eine Spannungswandlungseinheit 26 auf, die an der Verbraucherseite 24 eine Spannung V_{C} bereitstellt, die der halben Netzspannung V_{N} entspricht. Figur 7 zeigt die Schaltung 18 in einer Ausführungsvariante, bei welcher eine Spannungswandlungseinheit 26' dazu dient, eine Spannung V_{C}' an der Verbraucherseite 24 bereitzustellen, die der doppelten Netzspannung V_{N}' entspricht. In dieser Ausführung betragen diese Netzspannung V_{N}' vorzugsweise 750V DC und die von der Spannungsumwandlungseinheit 26' bereitgestellte Spannung V_{C}' 1,5kV DC. Der Aufbau der Spannungsumwandlungseinheit 26' entspricht dem der Spannungsumwandlungseinheit 26, wobei gegenüber den obigen Ausführungen die Eingangsseite 20 und die Verbraucherseite 24 miteinander vertauscht werden. Die Bezugszeichen für die Komponenten der Spannungsumwandlungseinheit 26' werden beibehalten und die Steuerung der Spannungsumwandlungseinheit 26' erfolgt wie in den obigen Ausführungsbeispielen. Der von der Netzversorgung 12 bezogene elektrische Strom wird in die Schaltung 18 an einem Punkt eingespeist, welcher zwischen den Teileinheiten 28h und 28t angeordnet ist. Die Potentiale Vₕ und Vₜ der Teileinheiten 28h, 28t sind dabei identisch und betragen jeweils die Netzspannung V_{N} in Höhe von 750V, d.h. die Hälfte der an der Verbraucherseite 24 bereitgestellten Spannung V_{C}.

Das Prinzip der Erfindung wurde in den Zeichnungen für eine elektrische Phase erklärt. Die Schaltung 18 kann mehrphasig, insbesondere mit synchroner Phasenverschiebung aufgebaut werden. Idealerweise ist die Schaltung für einen 3- oder 6-phasigen Betrieb ausgelegt. Eine konstruktive einfache Ausgestaltung kann bei einer Auslegung für einen 2-phasigen Betrieb erreicht werden.

## Patentansprüche

1. Schienenfahrzeug, mit einer Spannungserfassungseinheit (14) zum Erfassen einer von einer Netzversorgung (12) bereitgestellten als Gleichspannung ausgebildeten Netzspannung (V_{N}), zumindest einem elektrischen Verbraucher (25) und einer Schaltung (18), die zur Versorgung des elektrischen Verbrauchers (25) im Betrieb eine elektrische Energie von der Netzversorgung (12) bezieht, die Schaltung umfassend eine Spannungswandlungseinheit (26) zur Bereitstellung einer für den Betrieb des Verbrauchers (25) angepassten Spannung (V_{C}) an der Verbraucherseite (24), die eine erste, der Eingangsseite (20) zugeordnete, im Betrieb unter einem Potential (Vₕ) stehende Teileinheit (28h), zumindest eine zweite, der Verbraucherseite (24) zugeordnete, im Betrieb unter einem Potential (Vₜ) stehende Teileinheit (28t) und eine Ladungsübertragungseinheit (36) aufweist, die dazu vorgesehen ist, eine Ladung von der ersten Teileinheit (28h) zur zweiten Teileinheit (28t) zu übertragen,
wobei die Ladungsübertragungseinheit (36) zumindest ein Element (38), welches den Teileinheiten (28h, 28t) zugeordnet ist, und eine Schalteinheit (40) aufweist, die dazu vorgesehen ist, das zumindest eine Element (38) zwischen den Teileinheiten (28h, 28t) zyklisch umzuschalten,
ein Mittel (46), welches mit dem zumindest einen Element (38) eine Resonanzfrequenz definiert, und
eine Steuereinheit (42) zur Steuerung der Schalteinheit (40), die dazu vorgesehen ist, die Schalteinheit (40) mit der Resonanzfrequenz zu betreiben.

2. Schienenfahrzeug nach Anspruch 1,
**dadurch gekennzeichnet, dass**
der elektrische Verbraucher (25) als Traktionsanlage ausgebildet ist.

3. Schienenfahrzeug nach Anspruch 1 oder 2,
**dadurch gekennzeichnet, dass**
der elektrische Verbraucher (25) als Bordnetzversorgung ausgebildet ist.

4. Schienenfahrzeug nach einem der vorhergehenden Ansprüche 1 bis 3,
**dadurch gekennzeichnet, dass**
das zumindest eine Element (38) als Kondensator ausgebildet ist.

5. Schienenfahrzeug nach einem der vorhergehenden Ansprüche,
**dadurch gekennzeichnet, dass**
die Teileinheiten (28h, 28t) jeweils eine Halbbrückenschaltung (34h, 34t) aufweisen und das zumindest ein Element (38) zwischen den Brückenmittelpunkten der Halbbrückenschaltungen (34h, 34t) geschaltet ist, wobei die Schalteinheit (42) zumindest von steuerbaren Schaltelementen (32h.1, 32h.2) einer Halbbrückenschaltung (34h) gebildet ist.

6. Schienenfahrzeug nach einem der vorhergehenden Ansprüche,
**gekennzeichnet durch**
eine Steuereinheit (42) zur Steuerung der Schalteinheit (40), die dazu vorgesehen ist, die Schalteinheit (40) mit einer Frequenz von zumindest 1 kHz zu betreiben.

7. Schienenfahrzeug nach einem der vorhergehenden Ansprüche,
**dadurch gekennzeichnet, dass**
die Spannungswandlungseinheit (26) dazu vorgesehen ist, eine Spannung (V_{C}) an der Verbraucherseite (24) bereitzustellen, die der halben oder doppelten Netzspannung entspricht.

## Claims

1. Rail vehicle, with a voltage detection unit (14) for detecting a line voltage (V_{N}) that is provided by a power supply (12) and embodied as a DC voltage, at least one electrical consumer (25) and a circuit (18), which draws electrical energy from the power supply (12) to supply the electrical consumer (25) during operation, the circuit comprising
a voltage conversion unit (26) for providing a voltage (V_{C}), which has been adapted for the operation of the consumer (25), on the consumer side (24), which has a first subunit (28h), which is assigned to the input side (20) and is under a potential (Vₕ) during operation, at least one second subunit (28t), which is assigned to the consumer side (24) and is under a potential (Vₜ) during operation, and a charge transfer unit (36), which is provided to transfer a charge from the first subunit (28h) to the second subunit (28t),
wherein the charge transfer unit (36) has at least one element (38), which is assigned to the subunits (28h, 28t), and a switching unit (40), which is provided to switch the at least one element (38) between the subunits (28h, 28t) in a cyclic manner,
a means (46), which uses the at least one element (38) to define a resonance frequency, and
a control unit (42) for controlling the switching unit (40), which is provided to operate the switching unit (40) at the resonance frequency.

2. Rail vehicle according to claim 1,
**characterised in that**
the electrical consumer (25) is embodied as a traction system.

3. Rail vehicle according to claim 1 or 2,
**characterised in that**
the electrical consumer (25) is embodied as an on-board power supply.

4. Rail vehicle according to one of the preceding claims 1 to 3,
**characterised in that**
the at least one element (38) is embodied as a capacitor.

5. Rail vehicle according to one of the preceding claims,
**characterised in that**
the subunits (28h, 28t) each have a half-bridge circuit (34h, 34t) and the at least one element (38) is connected between the bridge centre points of the half-bridge circuits (34h, 34t), wherein the switching unit (42) is formed at least by controllable switching elements (32h.1, 32h.2) of a half-bridge circuit (34h).

6. Rail vehicle according to one of the preceding claims,
**characterised by**
a control unit (42) for controlling the switching unit (40), which is provided to operate the switching unit (40) at a frequency of at least 1 kHz.

7. Rail vehicle according to one of the preceding claims,
**characterised in that**
the voltage conversion unit (26) is provided to provide a voltage (V_{C}) on the consumer side (24) that corresponds to half or twice the line voltage.

## Revendications

1. Véhicule ferroviaire, comprenant une unité (14) de relevé d'une tension (V_{N}) de réseau constituée sous la forme d'une tension continue et donnée par une alimentation (12) de réseau, au moins un consommateur (25) électrique et un circuit (18), qui, pour l'alimentation du consommateur (25) électrique en fonctionnement, fournit une énergie électrique par l'alimentation (12) de réseau, le circuit comprenant une unité (26) de transformation de la tension pour la mise à disposition d'une tension (V_{c}), adaptée au fonctionnement du consommateur (25), du côté (24) du consommateur, qui a une première unité (28h) partielle, associée au côté (20) d'entrée et à un potentiel (Vₕ) en fonctionnement, au moins une deuxième unité (28t) partielle, associée au côté (24) du consommateur et à un potentiel (Vₜ) en fonctionnement, et une unité (36) de transfert de charge, prévue pour transférer une charge à la première unité (28h) partielle et à la deuxième unité (28t) partielle,
dans lequel l'unité (36) de transfert de charge a au moins un élément (38), qui est associé aux unités (28h, 28t) partielles, et une unité (40) de commutation, prévue pour commuter cycliquement le au moins un élément (38) entre les unités (28h, 28t) partielles,
un moyen (46), qui définit une fréquence de résonnance avec le au moins un élément (38) et
une unité (42) de commande pour la commande de l'unité (40) de commutation, qui est prévue pour faire fonctionner l'unité (40) de commutation à la fréquence de résonnance.

2. Véhicule ferroviaire suivant la revendication 1, **caractérisé en ce que**
le consommateur (25) électrique est constitué sous la forme d'un système de traction.

3. Véhicule ferroviaire suivant la revendication 1 ou 2, **caractérisé en ce que**
le consommateur (25) électrique est constitué sous la forme d'une alimentation de réseau de bord.

4. Véhicule ferroviaire suivant l'une des revendications 1 à 3 précédentes,
**caractérisé en ce que**
l'élément (38) est constitué sous la forme d'un condensateur.

5. Véhicule ferroviaire suivant l'une des revendications précédentes,
**caractérisé en ce que**
les unités (28h, 28t) partielles ont chacune un circuit (34h, 34t) à demi-pont et le au moins un élément (38) est monté entre les points médians de pont des circuits (34h, 34t) à demi-pont, l'unité (42) de commutation étant formée au moins d'éléments (32h.1, 32h.2) de commutation, pouvant être commandés, d'un circuit (34h) à demi-pont.

6. Véhicule ferroviaire suivant l'une des revendications précédentes,
**caractérisé par**
une unité (42) de commande pour la commande de l'unité (40) de commutation, prévue pour faire fonctionner l'unité (40) de commutation à une fréquence d'au moins 1 kHz.

7. Véhicule ferroviaire suivant l'une des revendications précédentes,
**caractérisé en ce que**
l'unité (26) de transformation de la tension est prévue pour mettre à disposition du côté (24) du consommateur une tension (V_{c}), qui correspond à la moitié ou au double de la tension du réseau.
